# EUROPEAN PATENT SPECIFICATION

(11) **EP 1 440 529 B1**
(45) Date of publication and mention of the grant of the patent: **24.08.2016**
(21) Application number: 02798206.5
(22) Date of filing: 10.09.2002
(51) Int. Cl.: H04L 12/26, H04L 29/08, H04L 29/12, G06F 9/50, H04L 12/727, H04L 12/733, H04L 12/701

(54) **SYSTEM AND METHOD FOR INFORMATION OBJECT ROUTING IN COMPUTER NETWORKS**
SYSTEM UND VERFAHREN ZUM INFORMATIONSOBJEKT-ROUTING IN COMPUTERNETZWERKEN
SYSTEME ET PROCEDE D'ACHEMINEMENT D'OBJETS D'INFORMATION DANS DES RESEAUX INFORMATIQUES

(30) Priority: 10.09.2001 US 323126 P; 10.09.2001 US 322899 P
(43) Date of publication of application: 28.07.2004
(73) Proprietor: Adara Networks, Inc., San Jose, CA 95110 (US)
(72) Inventor: GARCIA-LUNA-ACEVES, J., J., San Mateo, CA 94402 (US); PARSA, Michael, Santa Cruz, CA 95060 (US)
(74) Representative: Boult Wade Tennant
(86) International application number: PCT/US2002/028829
(87) International publication number: WO 2003/024007

(56) References cited:
- WO-A1-01/18641
- WO-A1-01/57693
- WO-A2-01/69457
- US-A- 6 047 330
- US-A- 6 130 881
- US-A1- 2002 163 889
- US-B1- 6 377 551
- US-B1- 6 400 681

## Description

### FIELD OF THE INVENTION

The present invention relates to a system and method for establishing and maintaining a virtual overlay network within a computer network or network of networks.

### BACKGROUND

An internetwork is a collection of computer networks interconnected by nodes, wherein each such node may be a general-purpose computer or a specialized device, such as a router. As such, an internetwork is often called a network of networks. The purpose of building an internetwork is to provide information services to end nodes, wherein each end node may be a general-purpose computer or a specialized device, such as a camera or a display. The Internet is an internetwork in which information is organized into packets to be distributed on a store-and-forward manner from source to destination end nodes, and in which routers and end nodes use the Internet Protocol (IP) to communicate such packets.

An overlay network is a virtual network interconnection between routers using the IP protocol. The IP in IP encapsulation, also known as IP tunneling, has long been used to connect parts of the Internet that have disjoint capabilities (W. Simpson, "IP in IP Tunneling." Internet Engineering Task Force (IETF), Request for Comments (RFC) 1853, October 1995). The encapsulation wraps the original IP packet inside another IP header. There could be potentially other headers between the outer and inner IP headers to control security or other parameters of the tunnel. The source and destination fields in the outer IP header identify the "endpoints" of tunnel, while the fields in the inner header identify the original sender and receiver of the packet.

Overlay networks can provide more robust connectivity or additional network services, such as Virtual Private Networks (VPN) or wide-area stream broadcast/multicast without any support from the underlying network. Another benefit consists of the ability to deploy sophisticated services without the network service provider's cooperation or involvement. For example, the Multicast Backbone (MBone) or the IPv6 Backbone (6Bone) are each implemented as overlay networks that enable multicast and IPv6 functionality, respectively. The overlay networks are, however, manually configured and established.

One of the earliest examples of dynamic overlay construction was flood-d (K. Obraczka et al. "A Tool for Massively Replicating Internet Archives: Design, Implementation, and Experience," Proceedings of the 16th International Conference on Distributed Computing Systems, Hong Kong, 27-30 May 1996). Obraczka et al. investigated scalable replication mechanisms for wide-area, autonomously managed services and proposed a new architecture that extends existing replication mechanisms to explicitly address scalability and autonomy. They target replications on the order of thousands to tens of thousand of weakly consistent replicas.

In recent years, there have been several proposals to construct overlay networks to perform application-level or end-system multicasting via trees on the overlay networks. This mechanism is gaining popularity for enabling multicast in the Internet. Y. Chawathe et al ("An Architecture for Internet Content Distribution as an Infrastructure Service," unpublished report) propose a new model for Internet multicast, where the multipoint delivery is viewed as an application-level service and not a network-level one. Their architecture relies on a collection of stategically placed network agents that collaboratively provide the multicast service. Agents organize themselves into an overlay network of unicast connections and build the multicast tree on top of the overlay structure.

Chu et al (Yang-hua Chu, Sanjay G. Rao and Hui Zhang, "A Case For End System Multicast," Proc. of ACM SIGMETRICS, Santa Clara,CA, June 2000, pp 1-12) developed a protocol called Narada. In Narada, end systems self-organize into an overlay structure using a distributed protocol. Narada attempts to optimize the effciency of the overlay based on end-to-end measurements. Meanwhile, Jannotti et al (John Jannotti et al, "Overcast: Reliable Multicasting with an Overlay Network", Proceedings of OSDI, San Diego, CA, October 2000) propose Overcast, which is an application-level multicasting system for reliable single-source multicast.

The X-Bone (Joe Touch, "Dynamic Internet Overlay Deployment and Management Using the X-Bone," Proc. IEEE ICNP, Osaka, Japan, 2000) is a software system that configures overlay networks. A user, via a web-based GUI or API, sends a request to an Overlay Manager to deploy overlays. The Overlay Manager functions in phases to discover available resources and configure and monitor them. The resource discovery is a multicast-based expanding ring search. The X-Bone installs routes, configures interfaces, updates DNS entries, and installs IPSEC keys and is targeted more in establishing overlay networks for Virtual Private Networks (VPN).

WO 01/18641 discloses a proximity-oriented redirection system for service-to-client attachment in a virtual overlay distribution network. WO 01/57693 discloses the dynamic assignment of addresses to nodes according to their relative location within a network.

### SUMMARY OF THE INVENTION

Accordingly, the invention provides a method as set out in claim 1 and a virtual overlay network as set out in claim 8.

In one embodiment, a virtual overlay network (VON) over an internetwork is dynamically maintained through inter-node communications that include messages adapted to establish node neighbors, the messages being passed over tunnels within the internetwork. Node neighbors may be established according to connectivity constraints of a node, for example a limit on the maximum number of permissible neighbors and/or a requirement for a communication path to a core node. Further, in some cases, some of the messages are used to query neighbor nodes about other neighbors thereof.

Node neighbors may be segregated into different types, for example candidate neighbors and chosen neighbors. Often, node neighbors are selected according, at least in part, to link cost metrics between nodes. These link cost metrics may include one or more of link latency, available bandwidth, and packet loss rate. Link latency may be estimated based on packet round trip time, while available bandwidth may be estimated using a packet-pair technique and/or according to transfers of blocks of data.

One or more of the inter-node messages may include redirection messages. In addition, directory requests based on a domain name system for the internetwork may be passed. In such cases, requesting node information may be encoded in the directory requests. Responses to the directory requests generally include identifications of nodes close to a requesting node.
Candidate neighbors and/or chosen neighbors may then be selected from the responses to the directory requests.

A further embodiment provides a virtual overlay network (VON) that includes a number of nodes interconnected through virtual links so as to establish a topology, wherein the nodes are configured to execute distributed algorithms to dynamically update the topology in response to changing conditions (e.g., communication link failures and/or node failures) in an underlying internetwork by exchanging inter-node communications that include messages used to establish node neighbors. The VON may also provide for a manual topology management console.

The distributed algorithms may include a virtual link management process at one or more of the nodes. These processes are adapted to allow each of the nodes to evaluate choices for node neighbors and to allow each of the nodes to satisfy and maintain connectivity constraints for the VON. Other processes may allow nodes to update their individual sets of chosen and/or candidate neighbors or even provide for converting candidate neighbors to chosen neighbors and vice-versa.

In some cases, one or more of the nodes may be a directory node configured to receive look up requests from one or more of the nodes and to return in response thereto one or more addresses of nearby nodes in the virtual overlay network. However, the directory node(s) need not be part of the VON. Other nodes are configured to evaluate one or more link metrics when establishing node neighbors. The link metrics may include one or more of latency, available bandwidth and loss rate. Latency may be estimated using round trip time, while available bandwidth may be estimated using either or both of a packet pair technique and/or a transfer of data.

The node neighbors may be segregated into static neighbors, chosen neighbors and candidate neighbors. In some cases, each node is restricted to a limited number of node neighbors that is less than all of the nodes of the virtual overlay network. The topology of the virtual overlay network may thus reflect that of an underlying internetwork. The messages passed between nodes within the VON may be one or more of: candidate neighbors requests; candidate neighbor acknowledgements; chosen neighbor requests; chosen neighbor acknowledgements; redirection requests; redirection acknowledgements; neighbor look up requests; and neighbor look up acknowledgements.

In yet another embodiment neighbor nodes of a virtual overlay network are automatically discovered by contacting a directory node and requesting a list of one or more nearby nodes withing the virtual overlay network; and then choosing from the list of nearby nodes at least one of nearby nodes as a chosen neighbor node. Choosing the chosen neighbor node(s) involves evaluating link cost metrics associated with communication paths to the one or more nearby nodes, wherein the link cost metrics are functions of one or more of latency, available bandwidths, and loss rates. In one partiular case, the link cost metrics are a function of a ratio of latency to available bandwidth. Part of the process of choosing neighbor nodes involves establishing communication tunnels with the chosen neighbor node.

Generally, the chosen neighbor node is selected so as to satisfy connectivity requirements of the virtual overlay network. Moreover, the selections may be periodically reevaluated and/or updated This choosing process involves executing a chosen neighbor heuristic that connects nodes that are close to one another in an underlying internetwork and may apply where the topology is flat or hierarchical.

In some cases, contacting the directory node involves transmitting a domain name system look up request. The request should include an identification of a requesting node encoded therein, for example an IP address. The list of one or more nearby nodes may then be transmitted as part of a domain name system response to the look up request.

Preferably, leaving the virtual overlay network involves affirmatively notifying neighbor nodes of the departure. This may include redirecting the neighbor nodes to other nodes.

### BRIEF DESCRIPTION OF THE DRAWINGS

The present invention is illustrated by way of example, and not limitation, in the figures of the accompanying drawings in which like reference numerals refer to similar elements and in which:
**Figure 1** illustrates an example of an internetwork in which the methods and systems of the present invention may operate.
**Figure 2** illustrates a virtual overlay network of Web routers configured in accordance with an embodiment of the present invention.
**Figure 3** illustrates functional componets of a Web router in accordance with an embodiment of the present invention.
**Figure 4** illustrates an example of a node joinging a virtual overlay network in accordance with the methods of the preent invention.

### DETAILED DESCRIPTION

### Introduction

The present invention provides an architecture and method to dynamically build and maintain a virtual overlay network over the Internet or other internetwork. The virtual overlay network (VON) consists of portions of the Internet used to interconnect a set of servers used to deliver a family of services to clients of the VON. Accordingly, the links of the VON are tunnels in the Internet or other peering mechanisms between Web routers, and the nodes in the VON are the web-routers.

The VON is established by connecting Web routers over tunnels or other means to form a service or content distribution cloud. The connection between two Web routers constitutes a virtual link. Web routers communicate and perform their content routing computations over the virtual links of the VON.

The term Web router refers to an embodiment of a computer system configured to map or associate the identifier (e.g., a uniform resource locator or URL) of a requested information object or service with the address (e.g., a network or IP address) of the optimal information object repository that can deliver the requested information object or service to another server (i.e., a requesting server that will ultimately respond to an original client request). The performance metrics used by Web routers to choose the information object repository(ies) (e.g., servers, caches, etc.) that should provide the requested information object(s) may include any of several performance parameters, such as an average delay from one information object repository to another along the network(s) (i.e., network delays), average processing delays at an information object repository, reliability of a path from one information object repository to another, available bandwidth in said path, and loads on the various information object repositories.

To simplify its description, the Web router is described and treated herein as a separate entity. However, the functionality of a Web router can be co-located and/or implemented as part of a content server, a Web server, a Web cache, a router or as a separate entity. Web routers may be implemented in software to be executed by general-purpose (or special-purpose) computer systems, or some or all of a Web router's functionality may be implemented in hardware. Such details are not critical to the present invention.

Web routers make use of a communication protocol to pass messages between one another over a reliable transmission protocol. These messages include information that allows the Web routers to dynamically update the mappings of identifiers of information objects and services to information object repository addresses based on one or more of the specified performance metrics. As indicated, these mappings may, and preferably do, specify optimal associations of information object identifiers to information object repository addresses. Also, the messages passed using the inter-Web router communication protocol may further report an associated address of a Web router co-located with an information object repository (optimal or otherwise) that contains the information object that is the subject of the message. Throughout this description, a Web router is referred to a node of the VON, and virtual links are called links of the VON.

In the following description, numerous specific details are set forth in order to provide a thorough understanding of the present invention. However, it will be evident to those of ordinary skill in the art that some of these specific details need not be used to practice the present invention and/or that equivalents thereof may be used. In other cases, well-known structures and components have not been shown in detail to avoid unnecessarily obscuring the present invention. Thus, although discussed with reference to certain illustrated embodiments, upon review of this specification, those of ordinary skill in the art will recognize that the present system and methods may find application in a variety of systems and the illustrated embodiments should be regarded as exemplary only and should not be deemed to be limiting in scope.

Some portions of the description that follow are presented in terms of algorithms and symbolic representations of operations on data within a computer memory (e.g., in pseudocode). These algorithmic descriptions and representations are the means used by those skilled in the computer science arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared and otherwise manipulated. It has proven convenient at times, principally for reasons of common usage, to refer to these signals as bits, values, elements, symbols, characters, terms, numbers or the like. It should be borne in mind, however, that all of these and similar terms are to be associated with the appropriate physical quantities and are merely convenient labels applied to these quantities. Unless specifically stated otherwise, it will be appreciated that throughout the description of the present invention, use of terms such as "processing", "computing", "calculating", "determining", "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

### Internetwork Basics

Before describing further details of the present invention, an overview of an internetwork environment in which Web routers (i.e., nodes) may be deployed will be presented. For purposes of the present invention, a topology of nodes is defined such that a given node has only a subset of all the nodes in a given system as its neighbor nodes. Nodes that are neighbors connect to each other using tunnels across one or more communication links. The topology of nodes and tunnels between them constitutes the VON. That is, the VON interconnects the nodes and overlays an internetwork made up of conventional IP routers, information object repositories, and other network components. In the VON, each tunnel link is assigned a value that describes the performance metric across the tunnel.

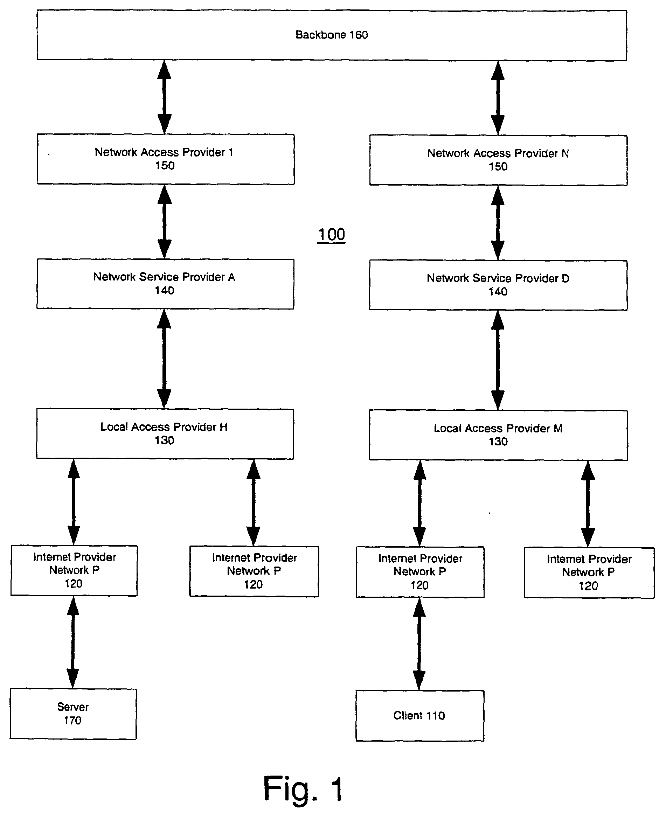

**Figure 1** illustrates an internetwork 100 and the methods and systems described herein enable the direction of clients and/or servers, etc. to either information objects or the caches and servers storing information objects distributed over computer networks such as internetwork 100. One example of an internetwork 100 is the Internet. Other examples include enterprise networks, local area networks, wide area networks, metropolitan area networks and networks of such networks. In the case where intemetwork 100 is the Internet, clients 110 will generally access content located at remote servers 170 through a series of networks operated by different providers. For example, clients 110 may have accounts with local ISPs 120 that enable the clients to connect to the Internet using conventional dial-up connections or one of a variety of high-speed connections (e.g., DSL connections, cable connections, hybrids involving satellite and dial-up connections, etc.). ISPs 120, in turn, may provide direct connections to the Internet or, as shown, may rely on other service providers 130, 140, 150 to provide connections through to a set of high-speed connections between computer resources known as a backbone 160. Connecting to a host (e.g., server 170) may thus involve connecting through networks operated by a variety of service providers.

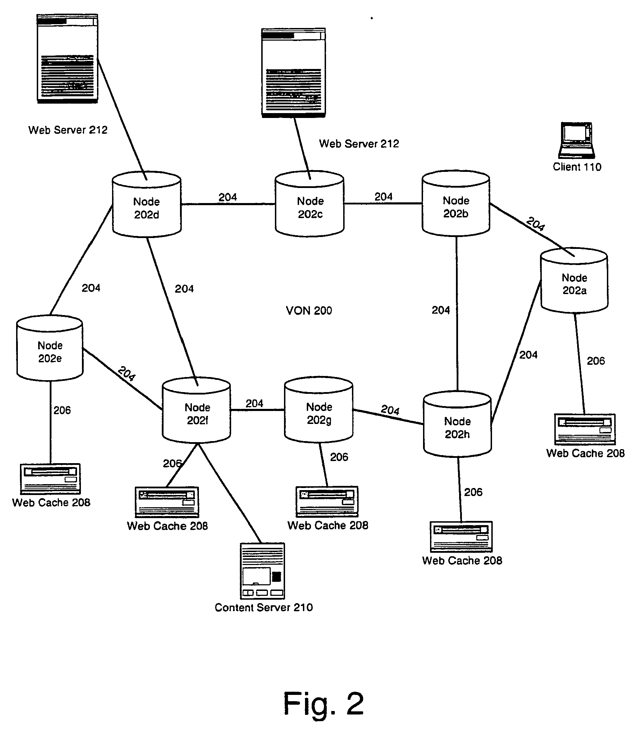

**Figure 2** illustrates a VON 200 of nodes 202a - 202h defined on top of the physical topology of an internetwork, such as the Internet, consisting of routers interconnected via point-to-point links or networks. The virtual network of nodes includes point-to-point links 204 configured between the nodes, and the links 206 configured between a node 202 and one or more Web caches 208 and content servers 210. Such links 204, 206 can be implemented using tunnels (e.g., Internet protocol (IP) tunnels) between nodes 202 and between nodes 202 and Web caches 208. As discussed above, messages can be exchanged between the nodes 202 via the tunnels. As shown in the figure, a client 110 is not necessarily part of the VON.

As indicated above, to reduce communication and processing overhead in nodes, a topology of nodes is defined such that a given node has as its neighbor nodes a subset of all the nodes in the system (where the term system refers to all or a portion of the VON 200 discussed above). A node may thus be configured with its set of neighbor nodes. Such a configuration may be expressed as a table of neighbor nodes that is defined by a network service provider and/or is dynamically updated. In some cases, nodes may dynamically select the set of neighbor nodes with which they should communicate out of all of the nodes in the system.

A node preferably communicates with its neighbor nodes using the Web Information Locator by Distance (WILD) protocol. The WILD protocol is disclosed in commonly owned U.S. Provisional Application No. 60/200,401, entitled "System and Method for Discovering Optimum Information Object Repositories in Computer Networks (WILD Protocol), filed April 28,2000 by J.J. Garcia-Luna-Aceves and Bradley R. Smith, now replaced by commonly owned and co-pending U.S. Patent Application 09/810,148, entitled "System and Method for Discovering Information Objects and Information Object Repositories in Computer Networks", filed March 15, 2001, by J.J. Garcia-Luna-Aceves. The WILD communication protocol provides for the exchange of one or more inter-node messages via the tunnels. These messages carry the mappings specifying the association between optimal information object repositories and information objects according to the specified metrics. When these mappings change due to changes in the topology of the Internet, the messages carry updated distance information (e.g., as computed according to the performance metrics) in the maps. Thus, using WILD each node 202 implements a distributed algorithm and executes a communication protocol with which it determines:
(1) the address of all the other nodes participating in the same VON; and
(2) the optimum distance to each node (i.e., the associated information object repository) in the VON and the neighbor node that offers such a distance.

The nodes 202 employ special rules when updating their local maps in response to received messages. The WILD protocol (or simply WILD) running at each node then constructs tables (which are stored locally in memory or other computer-readable media) containing the optimal mapping information. Each node uses the tables computed by WILD for directing a requestor to an optimal information object repository. Further details regarding the manner in which the maps and tables are generated and shared among nodes may be found in co-pending US Application No. 60/323,126, entitled "System and Method for Directing Clients to Optimal Servers in Computer Networks" filed September 10, 2001. Briefly, however, one or more tables are constructed at each nodes and these tables contain client-to-server distance information. The tables are stored in a computer-readable medium accessible by the corresponding node and are updated in response to revised client-to-node distance information. Such revised client-to-node distance information may be included in the inter-node communication messages and is preferably determined, at least in part, from internetwork connectivity information received through an exchange of messages according to an inter-domain routing protocol. Furthermore, the tables may be updated in response to revised server load information and the updated table information transmitted to one or more of the nodes using one or more inter-node communication messages.

### Web Routers

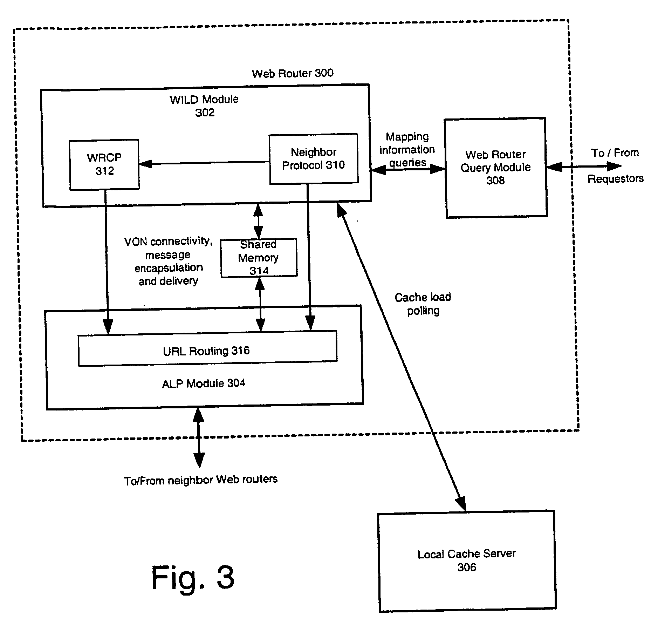

**Figure 3** illustrates the interaction between various functional components that make up a Web router node 300. The method implemented in nodes to determine an optimum server for a given information object or service is referred to as "URL Routing" and an information object identifier or service identifier is referred to as a "URL". The node maps each URL provided by a requestor to the address of an information object repository that can optimally provide the associated information object. This mapping of URLs to addresses is accomplished by the collaboration among nodes through WILD. Accordingly, the node contacted by the requestor can return the required addresses immediately after processing the request.

In each node 300, a WILD protocol module 302 uses mappings of clients (or, more generally, requestors)-to-nodes received from other nodes along with load information regarding any local servers 306 to produce a mapping table that lists the address of the server (i.e., information object repository) that is best suited to service requests from identified clients. The WILD protocol module 302 further uses an ALP module 304 for obtaining VON connectivity and node reachability information. It also uses ALP messages to encapsulate and deliver its own WILD messages to neighbor nodes. For further information regarding the Adaptive Link-State Protocol or ALP see, J.J. Garcia-Luna-Aceves and M. Spohn, "Scalable Link-State Internet Routing," Proc. IEEE International Conference on Network Protocols (ICNP 98), Austin Texas, October 14-16,1998, pp. 52-61.) Other routing protocols can be used instead of ALP, provided that the protocol does not create permanent or long-term loops after link cost increases or resource failures. The ALP module 304 reports distances to the WILD module 302, so that the WILD module 302 knows about unreachable nodes while determining the validity of different maps. The inter-communication between WILD module 302 and ALP module 304 may take place through the use of shared memory 314.

ALP module 304 notifies the WILD protocol module 302 as distances to various nodes and information object repositories change. When a node 300 receives a WILD message (i.e., a WILD message that was received encapsulated in an ALP message), it first validates the message contents, and then updates its tables based on distance. The end result is that the WILD tables at each node 300 converge to the optimum mappings.

The WILD protocol module 302 obtains load information from its local information object repository 306. This load information is subsequently used by the WILD protocol module 302 for generating the mappings discussed above. More particularly, the WILD module 302 periodically polls the local information object repository 306 to obtain the load information. If the information object repository 306 fails, a load of infinity is reported to the WILD module 302.

The WILD protocol module 304 also interacts with a Web router query (WRQ) module 308 in directing requestors to optimum information object repositories. The node 300 responds to queries from the WRQ module 308 for the nearest server, Web cache, redirector, DNS server or another node. A node may be contacted through the WRQ module 308 by a client or a server (or other information object repository) seeking to discover an optimum information object repository for one or more information objects distributed over the computer network. This scheme makes use of a neighbor protocol module 310.

### VON Topology

Returning now to a discussion of the VON 200, the VON topology can be established manually via a set of command tools or Web GUIs. That is, the present invention does not preclude a manual topology set-up. However, it is more useful to allow for dynamic configuration of the VON, especially as the size of the topology grows and the dynamic nature of the distribution cloud is taken into consideration. Additionally, static (i.e., manual) and dynamic topology control can be mixed and used together for maximum flexibility and control.

As will be descibed in greater detail below, this process of dynamic VON configuration provides that as a new node is added to the network it automatically discovers its neighbors and connects to the VON. To accommodate this process, the new node is provided with a configuration file containing the minimum information necessary to become part of a VON. Using the information in its configuration file, the new node contacts a so-called "directory" server to learn about nearby nodes (called candidate neighbors below). Then, where appropriate (i.e., depending on the specified performance metrics), the new node establishes tunnels to one or more of these nearby nodes and checks to see whether, if by doing so, it has established connectivity to the VON. If so, nothing further is required (other than periodic maintenance of its links to other nodes in response to updates and other inter-node messages, etc.). If not, the new node augments is connectivity until it is connected to the VON. Thus, the present invention provides effective distributed algorithms to automatically discover and maintain a topology of the VON that is close to optimum. The topology of the VON adapts to changing network conditions, such as node or link failures or traffic provisions, to maintain optimality. The architecture of the VON facilitates adding and removing nodes from the VON, and adapting the VON topology accordingly.

From the above, it should be apparent that the following are the main components of the architecture of the VON:
(1) A topology management console to access and configure nodes. Such a console is used for manual configuration of the VON (e.g., by a network operator).
(2) A tunnel management process (i.e., a software routine or daemon hereafter called "tund") and its configuration file on each node. The process tund is responsible for building and monitoring virtual links (i.e., tunnels) to other nodes.
(3) A WILD-enabled DNS (WDNS) and its configuration file on directory nodes. A directory node is defined as any node that runs WDNS and need not be part of the VON, depending on the VON configuration and the running of tund on the node.

Once connected to the VON, the general steps to be executed at a non-directory node to maintain VON connectivity are:
(1) Use WDNS to discover candidate neighbors. That is, make use of the directory nodes to learn about nearby nodes that may offer new paths and may be sutiable for inclusion in a set of chosen neighbors.
(2) Query neighbors about their neighbors. This way nodes learn about other nodes in a network.
(3) Evaluate choices for neighbors locally. That is, each node should use information gathered from other nodes to evaluate whether or not to choose nearby nodes as neighbors. These choices will depend on the cost of the link metrics (see below) associated with connections to the candidate nodes.
(4) Satisfy and maintain connectivity constraints. As discussed below, each node needs to maintain at least one path to a VON backbone to ensure connectivity to the VON as a whole.
(5) Update a set of chosen neighbors. Based on the evaluations and connectivity constraints, each node can establish a set of chosen neighbor nodes with which to communicate (e.g., using WILD messages to pass maps of optimum servers for client addresses or address ranges).
The above steps achieve an overlay network that is robust and adaptive to failures or changes in internetwork (i.e., Internet) conditions. It also uses the underlying physical network in an efficient manner.

The above process further demonstrates that there are two general considerations to be taken into account in constructing the topology of a VON: The quality of the links and the connectivity characteristics of the nodes. Links in the VON can be characterized by various metrics, such as latency, available bandwidth, loss rate, and others. In one embodiment of the present invention, only latency in the form of round-trip time (RTT) is considered. In another embodiment of the present invention, forward delay latency and the available bandwidth are the metrics used to characterize links in the VON.

Where used, metrics such as link latency and bandwidth need to be estimated or measured periodically. For example, a sender can measure round-trip latency via a probe packet that is reflected back at the destination. Ideally, the evaluations of such metrics take into account the asymmetry of these qualities on the virtual links and provide the values bth for the forward direction and the reverse direction. Moreover, the frequency of any probe package transmissions has to be such that the traffic overhead is minimal yet it must also provide for (i.e., allow for the capture information regarding) adaptability in the VON topology. For example, probes may be sent on the order of minutes (here, it is expected that the topology changes in the VON are rather infrequent, on the order of hours, because the underlying physical links and network routing provide adaptivity to near-term changes in network conditions).

The characteristics of interest in link quality and their estimators are thus:
(1) latency (e.g., as measured by probe RTTs); and
(2) available bandwidth (e.g., as measured using a packet-pair technique or a transfer of a block of (dummy) data).
The shortcoming of both techniques, however, is that they cannot isolate the latency and available bandwidth in the forward direction from the reverse one. The latency and bandwidth values for each link 1 can, nevertheless, be combined into a single cost value for the link, e.g., cost₁ = latency₁ / bandwidth. Then, this cost can be used in determining the links to be used in the topology of the VON.

In terms of connectivity, the VON topology should use the underlying network effciently. For practical and performance considerations, a node can have up to a maximum of kₘₐₓ neighbors. Because each node communicates with all its neighbors to maintain several types of routing information, allowing a node to have more than kₘₐₓ neighbors may adversely affect and degrade the performance of the routing protocols running at the node.

For the sake of fault-tolerance, it is desirable for the topology of the VON to be k-connected, where k ≥ 2. In a k-connected graph, the removal of k - 1 nodes and their incident links does not disconnect the graph. Note that the minimum degree of a graph needs to be "k" as a necessary condition for graph to be k-connected graph. As the value of k increases, the connectivity of the graph increases. This tends to reduce the diameter of the graph, which is also good. That is, the maximum number of (virtual) hops between nodes is decreased, thereby reducing the latencies between any two nodes of the VON. The increased connectivity of the VON topology also provides more choices for information dissemination over the VON.

To simplify the discussion of the present invention, the construction of a 2-connected topology (i.e., k = 2) is described. The method can be generalized to construct a k-connected graph in a distributed manner. Further, for the VON to scale with a large number of nodes its topology could include a hierarchical structure. For example, the present invention could be extended to be a two-level hierarchy, where the levels reflect inter-AS and intra-AS node communication. In the terminology of the Internet, a routing domain is called an autonomous system (AS). An example of an inter-domain routing protocol (suitable for inter-AS node communication) is the Border Gateway Protocol (BGP). An example of an intra-domain routing protocol (sutiable for intra-AS node communication) is the Open Shortest Path First (OSPF) protocol. Extending the approach described herein to a multi-level hierarchy is also possible. However, for simplicity the focus of the remaining description is on a flat topology.

The closest neighbor heuristic used in establishing the VON topology connects nodes that are close in the underlying cloud. That is, the topological structure of the VON reflects that of the underlying network. Therefore, nodes that are far according to the underlying cloud will not be neighbors. Also, in the discussion below, selecting the least-cost edges locally is a heuristic motivated by existing distributed minimum-spanning tree (MST) algorithms. Minimizing the cost of the VON corresponds to minimizing the utilization fn the network resources.

### Tund Neighbor and Query Messages

As alluded to above, a node can have three types of neighbors: A static neighbor is one that is established via a management console and is mandatory. A candidate neighbor is one that a node knows about but is not established as being adjacent in the VON topology. A chosen neighbor is one that is considered an actual neighbor in the VON topology. The same terms can be applied to the (tunnel) links connecting a node to its neighbors according to the neighbor type.

The type of neighbor is determined and updated in response to the sending and receiving of the following messages, whether between nodes or between management consoles and nodes (i.e., these messges are used in the process of setting up and maintaining the VON):
(1) Static-neighbor: request for a static neighbor.
(2) Static-ack: acknowledgment for static-neighbor request.
(3) Candidate-neighbor: request for a candidate neighbor.
(4) Candidate-ack: acknowledgment for candidate-neighbor request.
(5) Redirect-candidate: redirect a request for candidate.
(6) Chosen-neighbor: request to change a candidate to a chosen neighbor.
(7) Chosen-ack: acknowledgment for chosen-neighbor request.
(8) Redirect-chosen: redirect a request for chosen neighbor.
(9) Redirect-neighbor: request to redirect a neighbor (or remove neighbor).
(10) Redirect-ack: acknowledgment to redirect-neighbor.
A static-neighbor message is compulsory in that a node receiving such a message must become a static neighbor of an identified node. However, candidate-neighbor and chosen-neighbor messages can be redirected by a node receiving such a message. In this way, a node can limit its connectivity within the VON. The redirect responses usually carry alternatives addresses.

Nodes may also send queries to other nodes to learn about their connectivity. The following is a query message and response between neighbor nodes to communicate such information between one another.
(1) Lookup-neighbor: query for neighbors of a neighbor
(2) Lookup-ack: response to lookup-neighbor request

It is the establishment of neighbors that provides the connectivity between nodes and maintians the architecture of the VON. As network conditions change, a given node may need to revise its connectivity to other nodes in order to adapt to these changes. The following pseudo-code specifies the basic operations (SetCandidate, SetChosen, UnsetChosen, and RedirectNeighbor) performed at each node to initiate a change in the status of its neighbors. Each node maintains three sets: staticset, candidateset, and chosenset, corresponding to type of neighbors it has. The procedures SetCandidate and SetChosen are executed to make a neighbor candidate and chosen, respectively. The procedure UnsetChosen changes a chosen neighbor to a candidate neighbor. The procedure RedirectNeighbor redirects existing neighbors to other nodes.

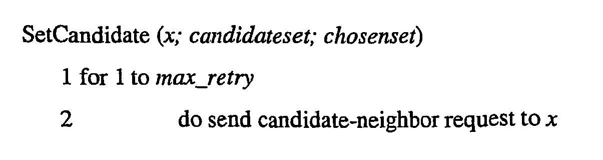

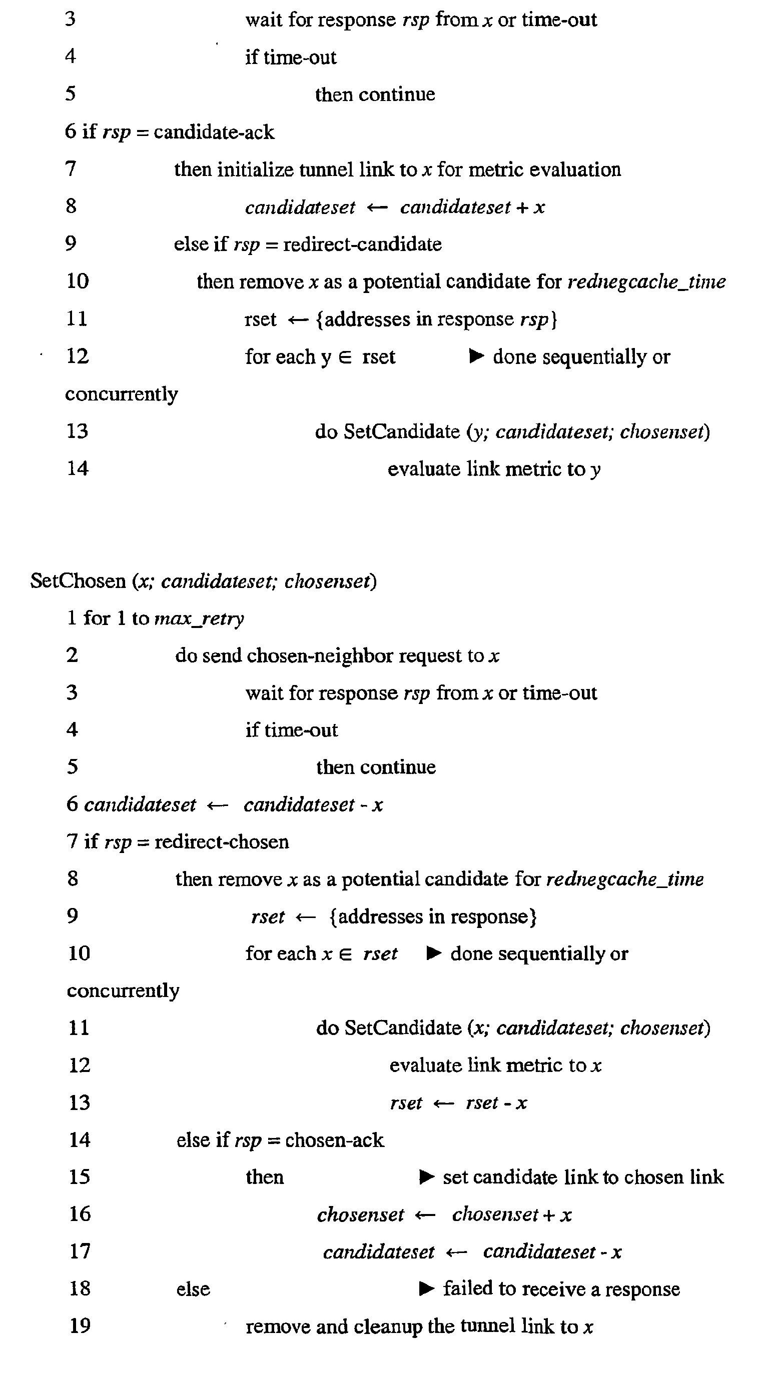

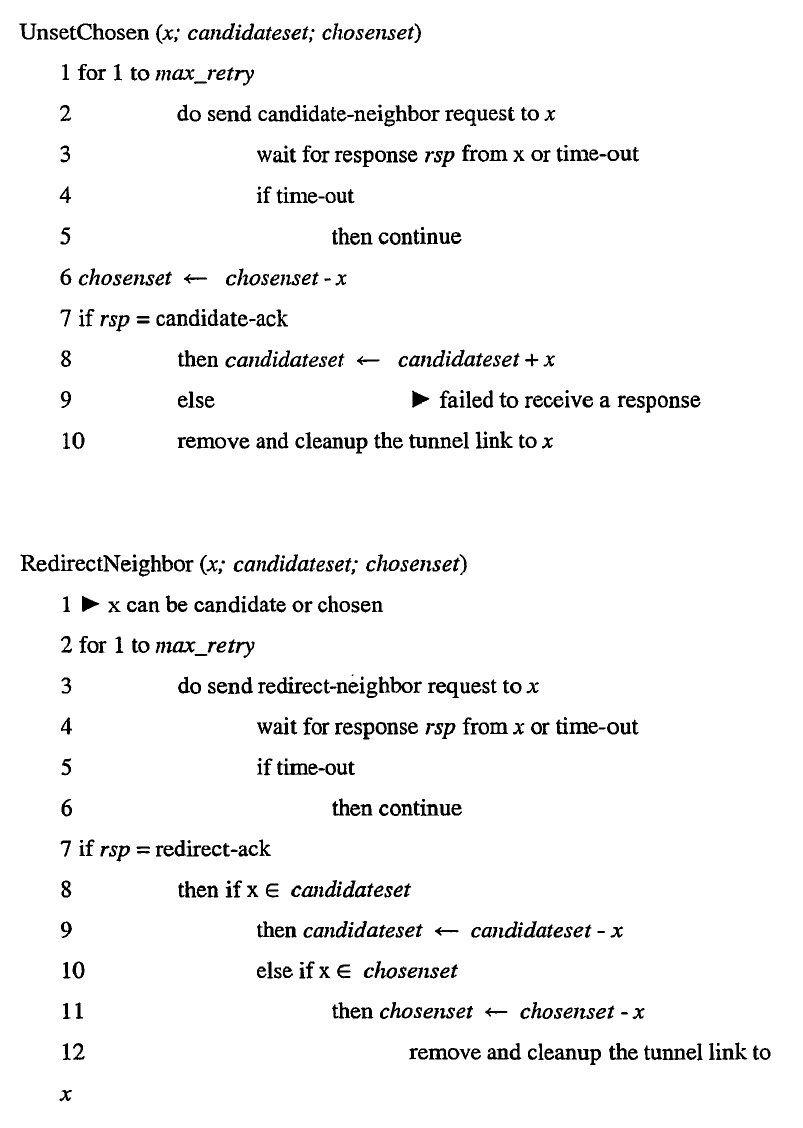

The following pseudo-code describes the steps taken by a node in response to receiving one of the above requests. The requests initiate a change to a neighbor's type. The process first determines whether the node has already reached its maximum permitted number of connections. If so, the request is redirected. If not, the requesting node is added as the appropriate type (in the case of a chosen or candidate request) or removed from consideration (in the case of a redirect request).

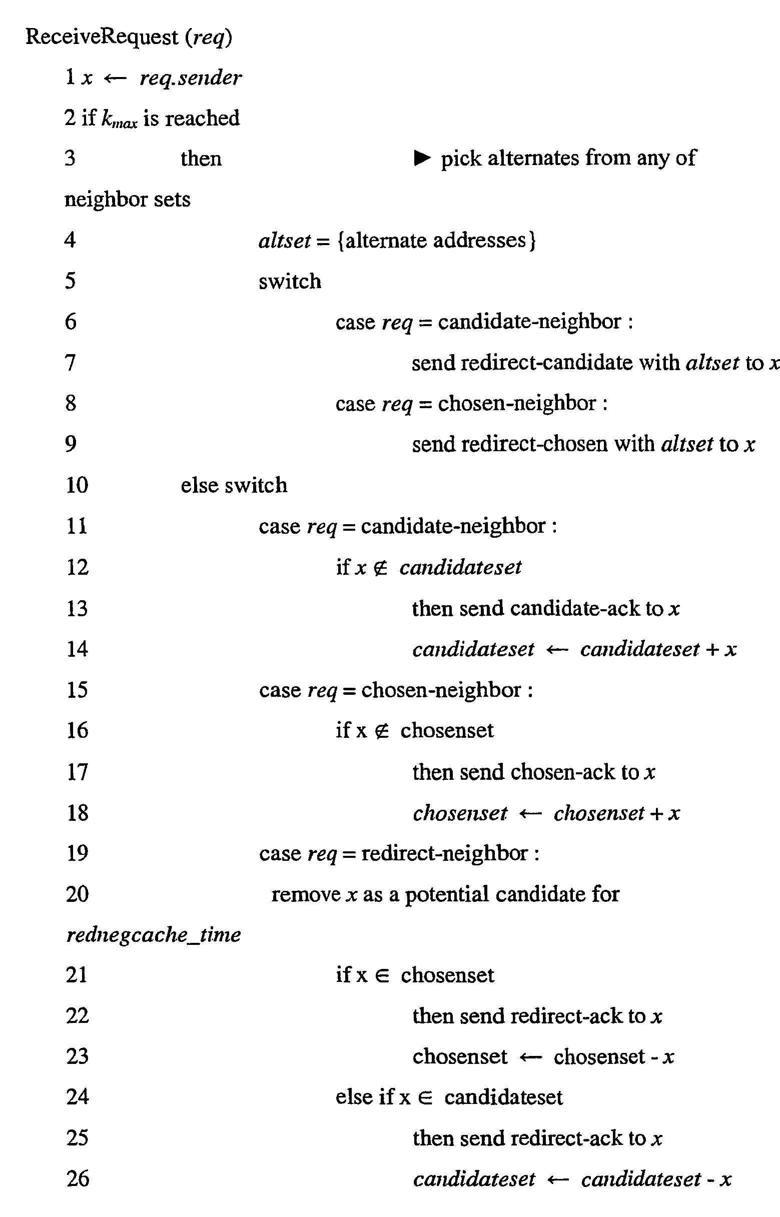

### Joining and Leaving a Topology

To allow for the dynamic creation and maintenance of the VON, a mechanism is needed to add new nodes into a topology and to remove them as needed. When a new node is installed in the field, it is installed with a configuration file containing the minimum information needed to become part of a VON. However, secure remote access (i.e., ssh) via a management console can be used to update the configuration file if needed. Removing a node (for maintenance, etc.) from a VON ends its participation in the topology control process. The automatic bootstrapping of a new node builds on the DNS (the Internet domain name system, see P. Mockapetris, "Domain Names - Concepts and Facilities", IETF RFC 1034, November 1987, and P. Mockapetris, "Domain Names - Implementation and Specification", IETF RFC 1035, November 1987) mechanism and as such benefits from the fault-tolerance and robustness of the DNS.

In a VON with only a few nodes and no distance measures between nodes, the topology of the VON can be a full mesh. A full mesh though is not scalable to a large number of nodes and should be applied only in a small distribution cloud. In a full mesh mode, a node starts by setting up a link with one existing node already in the VON. This can be managed, for instance, via the management console manually. After the link is established, the new node can discover all other nodes by obtaining the topology information from the existing node that is already a member of the VON. The new node can then set up tunnels to all other nodes in the VON.

### Joining a VON

For implementations other than the full mesh approach, the following procedure may be used. A new node with an IP address 0xaabbccdd (in hex) that needs to join the VON (with domain name d.isp.net), makes a DNS look up for aabbccdd.d.isp.net using the standard library routines for DNS access (i.e., gethostbyname). When the look up request is received by a WILD-enabled DNS (WDNS) server d.isp.net (an example of a directory server), it returns (again using the standard DNS protocols and packets) a set of nodes that are "close" to the new node. In doing so, the WDNS server uses the IP address of the new node encoded in the look up string to select the set of candidate neighbors for the new node. The IP address of the new node is encoded in the look up request because the standard DNS query does not carry the IP address of the originating client for the lookup request, but rather carries only the address of the local DNS server.

At a minimum, the size of the set of nodes returned by the WDNS server could be one; the size of the set does not imply how many neighbors the new node will have in the VON. However, returning a larger set allows for fault-tolerance in that another candidate can be contacted if one of the nodes in the set is down or unreachable due to transient failures or delays. Returning only one value is just the simplest approach.

Through the DNS mechanism, a response arrives at the new node with a set of the IP addresses of candidate neighbors. The new node evaluates the link metric for each of the candidates. Then it establishes at least kₘᵢₙ links by adding the "cheapest" links according to the link metric(s). If the size of the candidate set from the WDNS server is less than kₘᵢₙ, the node builds up its candidate set from its existing neighbors.

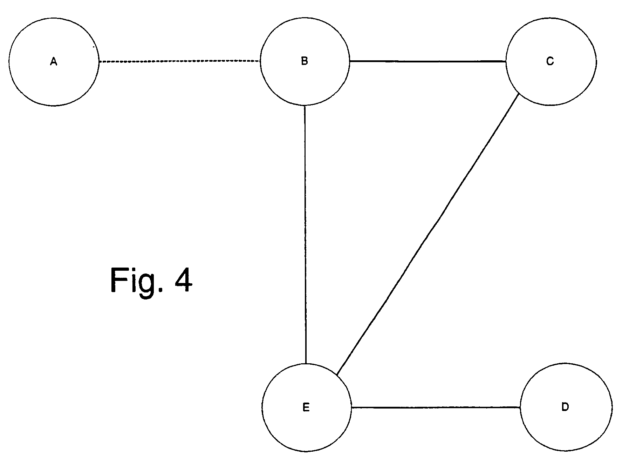

For example, consider the network shown in Figure 4, where node A is the new node to join the VON consisting of nodes B, C, D and E. For the sake of the example, let node B be the nearest node, and the only one returned by the WDNS server in response to a DNS look up request by node A. Then, node A will establish a (tunnel) link with node B.

Once a new node establishes its links, it performs a connectivity test. The connectivity test determines whether or not the new node is connected to a "core" node (i.e., has a route, through one or more neighbors, to a core node). A core node is any node that is on the virtual backbone of the topology. The virtual backbone is a set of nodes that are monitored and maintained to be up and available 24 hours a day/7 days a week via a Network Operation Center (NOC). It could consist of only one node. If there is a set of nodes on the backbone, then it is assumed that all of them are guaranteed, via network monitoring tools (e.g., the Simple Network Management Protocol (SNMP)), to be connected to each other. Otherwise, if the cores are not connected, isolated islands of nodes can be formed around each core and the overall VON topology would be disconnected.

The core nodes to use are also determined by a DNS look up, i.e., by resolving core.d.isp.net. As a convention, the core nodes could be the WDNS nodes. At a minimum, there is one entry in the core set. If there are multiple core nodes in the response, the new node will check to see if it has a route to any of them. As long as there is a route to one core node then the new node is connected to the VON topology.

The following pseudo-code describe the actions taken by a WDNS node in the process of a DNS look up (the term WR referes to Web router or simply a node). An anchor is a node that has an EGP and IGP feeds (e.g., BGP and OSPF, respectively), and is responsible for computing the mapping of client addresses or address ranges to a best match server. A WDNS node should therefore be connected to an anchor to allow for its computation of matching address prefixes to the best nodes. A topology graph represents the local knowledge of the network nodes and their interconnections, i.e., a "map."

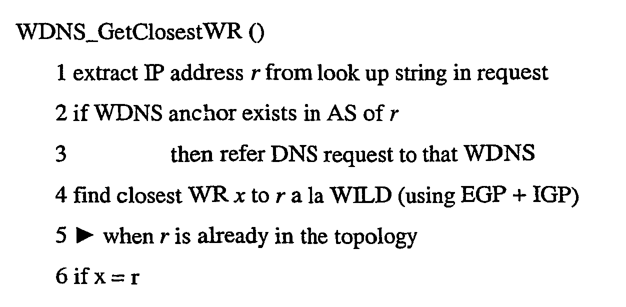

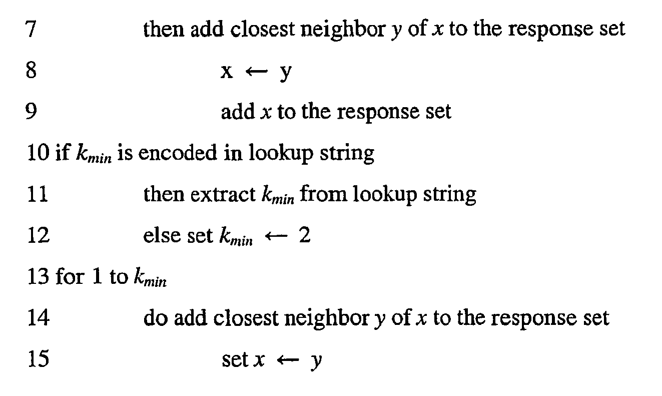

The procedure TUND_Join below is a pseudo-code representation of the process discssed above and describes the steps taken by a node to join the VON. The calls to ConnectivityTest, MinConnect, MaxConnect, and AugConnect (each presented in detail below) relate to the connectivity requirements and are described in the following paragraphs.

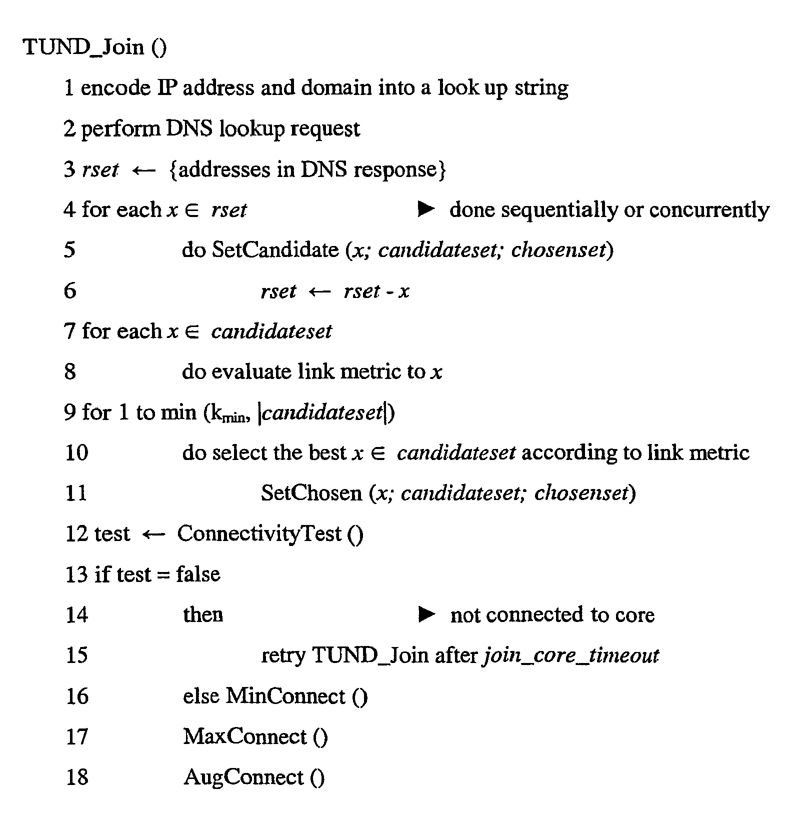

### Leaving a VON

For fast propagation of topology changes, it is desirable to make the departure of a node from a VON explicit. That is, the node being removed from a VON should send explicit notifications to this effect, rather than using an implicit "removal by silence" timeout. VON links are removed reliably to distinguish them from link failures, to minimize any possible disruption to the topology. A node can leave only when its departure would not partition the VON topology. The process TUND_Leave in the following pseudo-code describes the steps taken by a node leaving a VON. Esentially, all of the nodes existing chosen and candidate neighbors are redirected to other nodes.

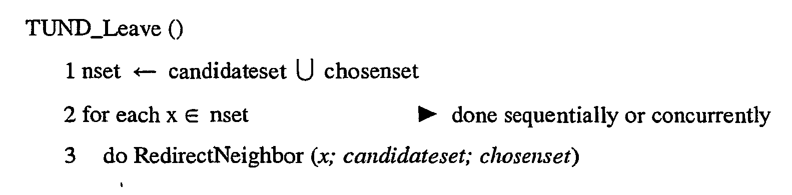

### Failures in VON Topology

Occasinally, nodes or links in the VON will fail and the remaining nodes may need to take action to restore lost connectivity to the VON. Thus, two general tasks for a node adjacent to a link or node failure to perform after the failure are:
(1) perform a connectivity test to determine if the node is still connected to the core; and
(2) a node may acquire new neighbors to meet the minimum connectivity of a VON either to satisfy kₘᵢₙ or to augment the connectivity.

The links of a VON, or tunnels, adapt to changes in the underlying network by virtue of adaptive routing in the underlying network. In other words, the VON links may follow different paths in the underlying network over time. A VON link functions as long as the underlying network is connected between the two ends of the link. There could be transient VON link failures during the period when the underlying routing changes between the tunnel endpoints. Note that there could be race conditions in which the VON topology may seem connected but, in fact, it is not because the underlying routing has not converged.

However, in the event of network partitions in the underlying network, VON links will fail within a finite time. Any permanent or long-lived partitions in the underlying network will result in partitioning of the VON topology. If the implementation considerations allow it, a link failure indication will be sent from the routing process to the "tund" process, since the routing process has a link failure detection mechanism. Otherwise, a "hello" protocol may be used to detect VON link failures.

When a node detects a VON link failure, it will attempt to replace the failed endpoint with a subset of the neighbors of the failed endpoint. This information is gathered from its local topology graph. This is the preferred method; nevertheless, the node could, alternatively, perform a DNS look up for aabbccee.d.isp.net, where aabbccee is the IP address of the failed endpoint. In response, the requesting node would receive a set of nearby nodes to use to establish a new link. Considering the example in Figure 4, if node B failed, then node A would try to establish links with nodes C and/or E, depending on the link metric(s) and its connectivity requirements. The neighbors of B are known from its routing advertisements to A, which A maintains in its topology graph.

A node may fail due to any number of reasons, such as power outages, hardware or software failures, etc. A node failure can result in a partitioning of the VON topology, even though the underlying network is connected. To avoid this partitioning, the connectivity of a VON needs to be "rich", i.e., at least k-connected. When a node detects that its neighbor has failed, it executes a ConnectivityTest. In the process, a node knows whether or not it is still connected to the core of a VON. Thereafter, the node may augment its local connectivity, so that it has no "cut" neighbors by performing the AugConnect process (see below). This procedure results in a 2-connected topology in this example.

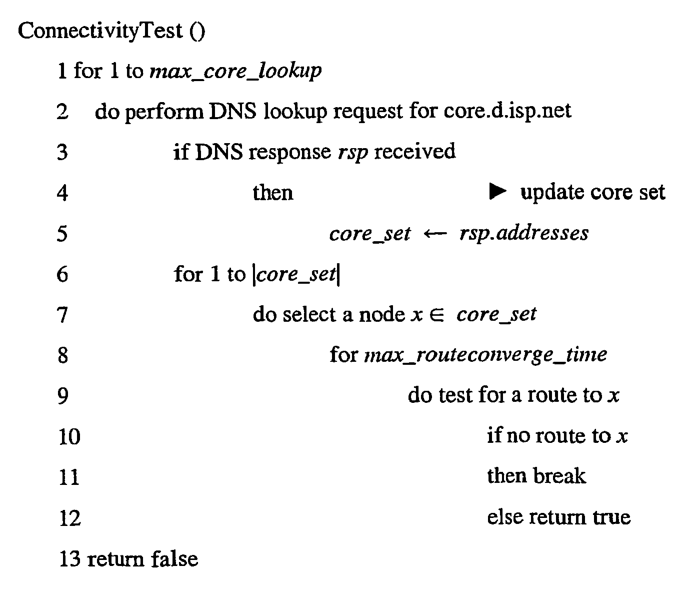

### Neighbor Changes and Maintenance

The minimum and maximum number of neighbors to maintain, kₘᵢₙ and kₘₐₓ are configurable variables. In the pseudo-code examples set forth in this description, there are also "low and high water marks", k_{low} and k_{high} respectively, between these minimum and maximum values. These low and high water marks are a function of kₘᵢₙ and kₘₐₓ, and may be used as warning markers that the minimumor maximum values are being reached.

As mentioned above, a node learns about other candidates via its existing neighbors. For example, every node can query any of its neighbors (of any type) for the neighbors of the neighbor. A node can also learn about other candidates via it chosen set of neighbors. This technique of querying neighbors can be used to implement an expanding ring search to find nodes at various hops in the topology. Note, however, that a node may not know all the chosen neighbors of its chosen neighbors if only partial topology information is used in the routing protocol (e.g., ALP).

In order to satisfy its minimum connectivity requirements, a node performs the MinConnect process (e.g., any time kₘᵢₙ criteria is not satisfied at a node). At the same time, a node should actively stay below its maximum connectivity kₘₐₓ. As new neighbors acquire a node, therefore, the node should unload some of its existing neighbors. This procedure is described in MaxConnect pseudo-code below. Finally, when a node reaches its k_{high}, it starts sending redirections to a subset of its other neighbors.

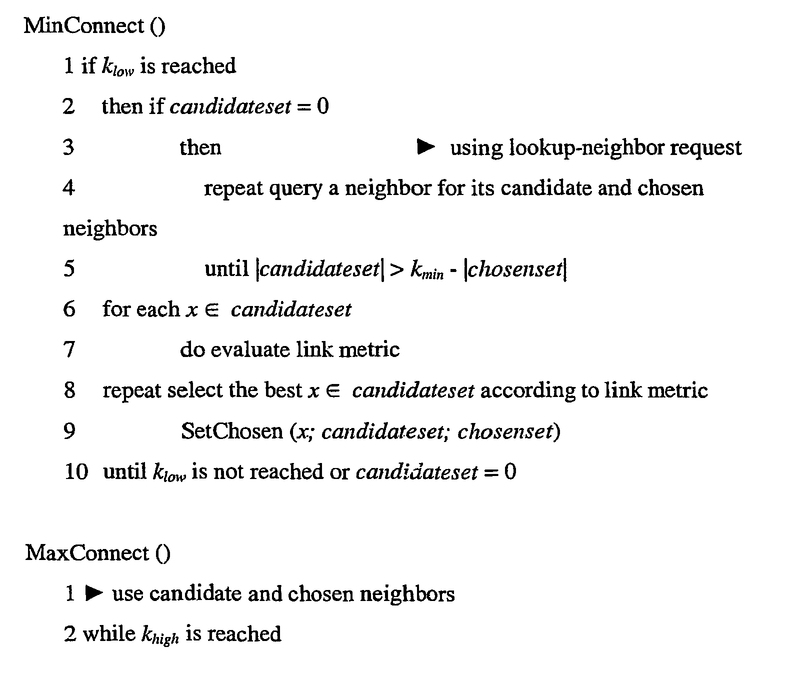

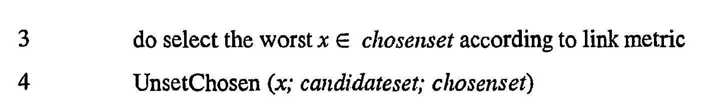

Each node performs the process AugConnect to establish a topology robust to failures. The procedure consists of a kₘₐₓ application of Dijkstra's algorithm. Therefore, it would be straightforward to achieve an O(kₘₐₓ _ n log(n)) = O(n log(n)) running time for this process through proper design of the various data structures. This efficiency is desirable to scale the process to large networks.For the purpose of augmenting the topology, a chosen neighbor is classified as either primary or secondary. The AugConnect procedure augments the topology by adding a secondary chosen neighbor in case a primary chosen neighbor fails. 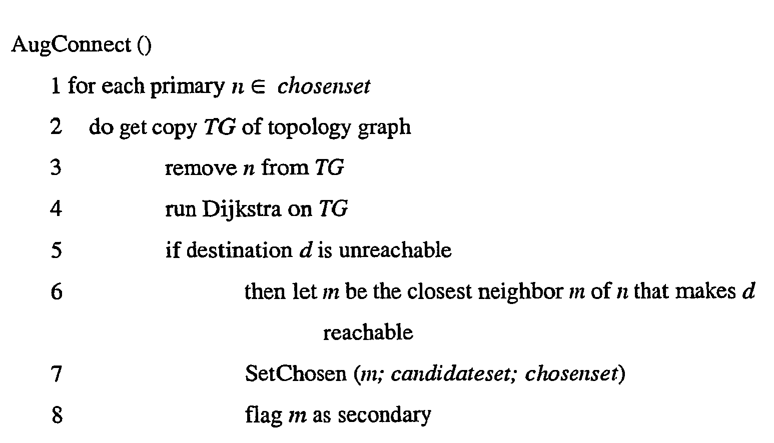 In the example of Figure 4, node A would augment its connectivity by establishing a link with either node C or E, because if node B, which a primary chosen neighbor, fails, then the rest of the nodes become unreachable.

When the underlying topology information is available, a node on an on-going basis performs to a DNS look up to discover new nodes that are close to it. In the example, if a new node is added between A and B or if E become closer to A than B according to the metric, then A can update it link accordingly. Procedure ClosestConnect provides for this process.

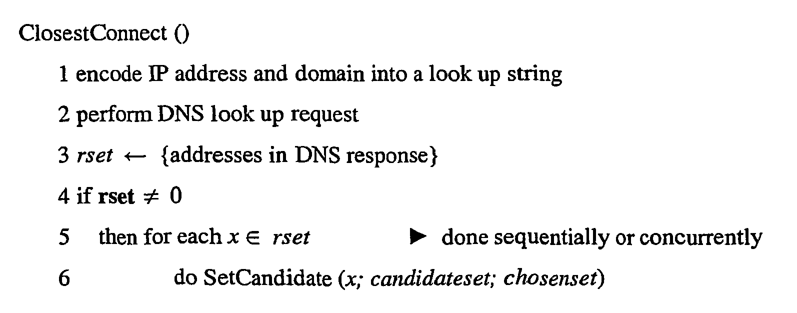

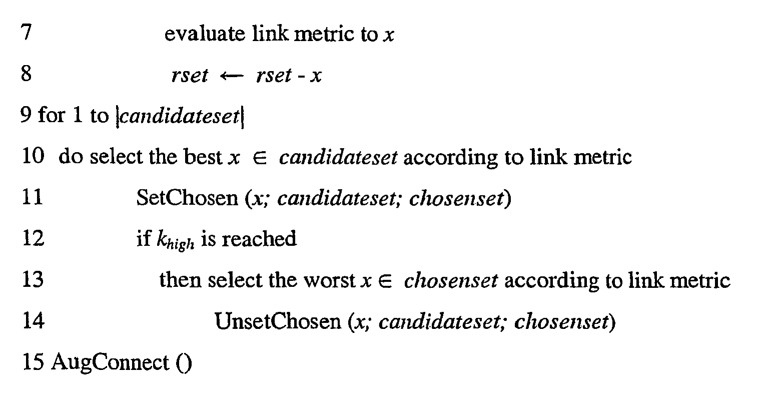

### Main Event-Handling Loop

The following pseudo-code representation describes the main procedure executed at a node. When the node first boots up, it consults its configuration file as discussed above. Next, any static tunnels that have been manually configured are established. Thereafter, the node executes TUND_Join to join the VON by dynamically establishing its candidate and chosen neighbor sets. After joining the VON, the node waits for messages from other nodes or other indications of network condition changes and acts accordingly to reestablish its connectivity.

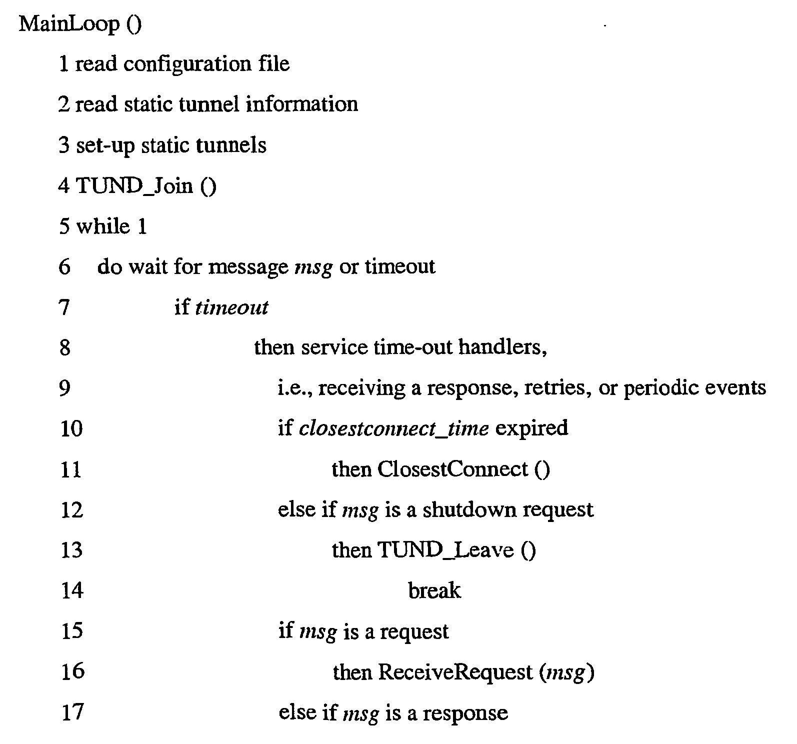

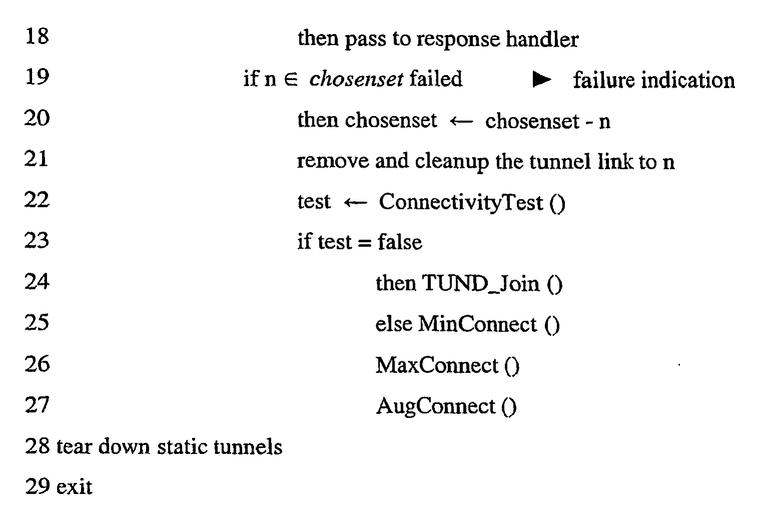

### Summary of Configurable Variables

The following is a list of variables used in the above pseudo-code descriptions. Note that the specified default values can always be overridden in a node configuration file as needed.
kmin: the minimum number of non-static neighbors to have (default: 1):
kmax: the maximum number of non-static neighbors to have (default: 10).
klow: the low water number of non-static neighbors to have (should be a function of kmin).
khigh: the high water number of non-static neighbors to have (should be a function of kmax).
closestconnect_time: time to check if there is a new closest node.
max_retry: maximum number o time to retry sending a request.
rednegcache_time: time to keep a negative cache of a redirecting neighbor.
max_core_lookup: number of core lookup trials.
join_core_timeout: interval to wait before retrying failed connectivity test.
max_routeconverge_time: maximum time for the underlying routing protocol to converge.

Thus, an architecture and method to dynamically build and maintain a virtual overlay network over the Internet or other internetwork has been described. Although the foregoing description and accompanying figures discuss and illustrate specific embodiments, the present invention is to be measured only in terms of the claims that follow.

## Claims

1. A method, comprising:
dynamically maintaining a virtual overlay network, VON, (200) over an internetwork (100) through inter-node communications that include messages adapted to establish node neighbors from a plurality of nodes (200a-202h), the messages being passed over tunnels within the internetwork, wherein at least one of the nodes (200a-202h) includes a tunnel management process for building and monitoring the tunnels within the internetwork and wherein the node neighbors include at least one of a candidate neighbor node, a chosen neighbor node, or a static neighbor node;
receiving, by a directory node, directory requests from a first node of the nodes (200a-202h) and returning in response thereto one or more addresses of nearby candidate neighbor nodes of the first node (200a-202h) that are selected from the plurality of nodes (200a-202h) the first node sending a candidate neighbor message to a second node of the plurality of nodes (200a-202h) that is selected from among the nearby candidate neighbor nodes (200a-202h) of the first node (200a-202h);
receiving an acknowledgement message from the second node (200a-202h) to establish the second node (200a-202h) as a candidate neighbor node of the first node (200a-202h) when the second node (200a-202h) has not reached its maximum permitted number of connections; and
receiving a redirect candidate message from the second node (200a-202h) to redirect the candidate neighbor message for limiting a connectivity of the second node within the VON when the second node has reached its maximum permitted number of connections.

2. The method of claim 1, wherein when the second node (200a-202h) is established as a candidate neighbor node of the first node (200a-202h), at least one of the messages is used to query the second node (200a-202h) about nearby candidate neighbor nodes of the second node (200a-202h) that are selected from the nodes (200a-202h), wherein a candidate neighbor of the second node (200a-202h) is established as a candidate neighbor node of the first node (200a-202h) based on at least one of:
a connectivity of the candidate neighbor of the second node (200a-202h), or one or more link cost metrics between the first node (200a-202h) and the candidate neighbor of the second node (200a-202h).

3. The method of claim 1 or 2, wherein each of the plurality of nodes (200a-202h) in the VON is connected via one or more communication paths to one or more core nodes in the VON, wherein at least one of the messages is used to determine the one or more communication paths to the one or more core nodes, and wherein any one of the plurality of nodes (200a-202h) that is not connected to any of the one or more core nodes in the VON is not in the VON.

4. The method of claim 1 further comprising:
sending a chosen neighbor message to the second node (200a-202h); and
receiving an acknowledgement message from the second node (200a-202h) to establish the second node (200a-202h) as a chosen neighbor node of the first node (200a-202h) or receiving a redirect chosen message from the second node (200a-202h) to redirect the chosen neighbor message for limiting the connectivity of the second node within the VON.

5. The method of claim 4, wherein at least one of the candidate neighbor node or the chosen neighbor node is selected based on one or more link cost metrics between nodes, wherein the one or more link cost metrics comprise at least one of link latency, available bandwidth, or packet loss rate, wherein link latency is estimated based on packet round trip time, and wherein available bandwidth is estimated using at least one of a packet-pair technique or transfers of blocks of data.

6. The method of claim 2, wherein the link cost metrics comprise at least one of link latency, available bandwidth, or packet loss rate, wherein link latency is estimated based on packet round trip time, and, wherein available bandwidth is estimated according to at least one of a packet-pair technique or transfers of blocks of data.

7. The method of claim 1, wherein the directory requests are based on a domain name system for the internetwork, wherein node information of the first node (200a-202h) is encoded in the directory requests, and wherein the chosen neighbor nodes of the first node (200a-202h) are selected from the nearby candidate neighbor nodes of the first node (200a-202h).

8. A virtual overlay network comprising:
a number of nodes (200a-202h) interconnected through virtual links so as to establish a topology, wherein the nodes are configured to execute distributed algorithms to dynamically update the topology in response to changing conditions in an underlying internetwork by exchanging inter-node communications that include messages used to establish node neighbors from the nodes (200a-202h), wherein at least one of the nodes (200a-202h) includes a virtual link management process for building and monitoring the virtual links within the internetwork, wherein the node neighbors include at least one of a candidate neighbor node, a chosen neighbor node, or a static neighbor node, wherein a directory node is configured to receive look up requests from a first node of the nodes (200a-202h) and to return in response thereto one or more addresses of nearby candidate neighbor nodes from the nodes (200a-202h) in the topology, wherein the messages include a candidate neighbor message rent from the first node to establish second node of the nodes (200a-202h) that is selected from among the nearby candidate neighbor nodes as being a candidate neighbor node of the first node (200a-202h), an acknowledgement message sent from the second node (200a-202h) to the first node (200a-202h) when the second node (200a-202h) has not reached its maximum permitted number of connections, and a redirect candidate message rent from the record node to the first node to redirect the candidate neighbor message to a third node of the nodes (200a-202h) for limiting a connectivity of the second node (200a-202h) within the topology when the second node has reached its maximum permitted number of connections, wherein the third node (200a-202h) is selected from among the nearby candidate neighbor nodes as being a candidate neighbor node of the first node (200a-202h).

9. The virtual overlay network of claim 8, wherein the changing conditions comprise at least one of:
one or more communication link failures , or one or more node failures.

10. The virtual overlay network of claim 8, further comprising:
a manual topology management console to establish static nodes in the topology.

11. The virtual overlay network of claim 8, wherein the distributed algorithms include processes adapted to allow each of the nodes (200a-202h) to evaluate choices for chosen neighbor nodes from their individual sets of nearby candidate neighbor nodes, wherein the distributed algorithms include processes adapted to allow each of the nodes (200a-202h) to satisfy and maintain the virtual overlay network, and wherein the distributed algorithms include processes adopted to allow the nodes to update their individual sets of chosen neighbor nodes.

12. The virtual overlay network of claim 8, wherein the nodes (200a-202h) are further configured to evaluate one or more link metrics when establishing at least one of the candidate neighbor node or the chosen neighbor node, wherein the link metrics comprise one or more of latency, available bandwidth and loss rate, wherein latency is estimated using round trip time, wherein available bandwidth is estimated using at least one of a packet pair technique or a transfer of data, wherein each node is restricted to a limited number of candidate neighbor nodes or chosen neighbor nodes that is less than all of the nodes of the virtual overlay network, and wherein the topology of the virtual overlay network reflects that of an underlying internetwork.

13. The virtual overlay network of claim 8, wherein the messages comprise one or more of:
connectivity tests;
candidate neighbors requests
candidate neighbor acknowledgements;
chosen neighbor requests;
chosen neighbor acknowledgements;
redirection requests;
redirection acknowledgements;
neighbor look up requests; and
neighbor look up acknowledgements.

14. The virtual overlay network of claim 13, wherein each of the nodes (200a-202h) in the topology is connected via one or more communication paths to one or more core nodes in the topology, wherein any one of the nodes (200a-202h) that is not connected to one or more core nodes in the topology is not in the virtual overlay network, and wherein the connectivity tests are used to determine the one or more communication paths to the one or more core nodes.

15. The method of claim 1, further comprising:
establishing a static neighbor node of the first node (200a-202h), that is selected from the plurality of nodes (220a-202h), wherein the static node is selected from the plurality of nodes (220a-202h) and wherein the static neighbor node is established using a manual management console.

## Patentansprüche

1. Verfahren, das umfasst:
dynamisches Unterhalten eines virtuellen Overlay-Netzwerkes, VON, (200) über einem Netzwerkverbund (100) durch Übertragungen zwischen Knoten, die Nachrichten umfassen, die dazu ausgebildet sind, unter mehreren Knoten (200a-202h) Knotennachbarn einzurichten, wobei die Nachrichten über Tunnel innerhalb des Netzwerkverbunds geführt werden und wobei zumindest einer der Knoten (200a-202h) einen Tunnelverwaltungsprozess zum Aufbauen und Überwachen der Tunnel innerhalb des Netzwerkverbunds aufweist und wobei die Knotennachbarn einen Nachbarknotenkandidaten und/oder einen Auswahlnachbarknoten und/oder einen statischen Nachbarknoten umfassen, Empfangen von Verzeichnisanfragen von einem ersten Knoten der Knoten (200a-202h) an einem Verzeichnisknoten und hierdurch veranlasstes Zurücksenden einer oder mehrerer Adressen von nahe gelegenen Nachbarknotenkandidaten des ersten Knotens (200a-202h), die unter den mehreren Knoten (200a-202h) ausgewählt wurden,
wobei der erste Knoten eine Nachbarkandidatennachricht an einen zweiten Knoten der mehreren Knoten (200a-202h) sendet, unter den nahe gelegenen Nachbarknotenkandidaten (200a-202h) des ersten Knotens (200a-202h) ausgewählt ist,
Empfangen einer Bestätigungsnachricht von dem zweiten Knoten (200a-202h), um den zweiten Knoten (200a-202h) als Nachbarknotenkandidaten des ersten Knotens (200a-202h) einzurichten, wenn der zweite Knoten (200a-202h) die maximal zulässige Anzahl von Verbindungen nicht erreicht hat, und
Empfangen einer Umleitungskandidatennachricht von dem zweiten Knoten (200a-202h), um die Nachbarkandidatennachricht zur Begrenzung der Konnektivität des zweiten Knotens innerhalb des VON umzuleiten, wenn der zweite Knoten die maximal zulässige Anzahl von Verbindungen erreicht hat.

2. Verfahren nach Anspruch 1, wobei, wenn der zweite Knoten (200a-202h) als Nachbarknotenkandidat des ersten Knotens (200a-202h) eingerichtet wird, zumindest eine der Nachrichten dazu verwendet wird, von dem zweiten Knoten (200a-202h) nahe gelegene Nachbarknotenkandidaten des zweiten Knotens (200a-202h) abzufragen, die unter den Knoten (200a-202h) ausgewählt wurden, wobei ein Nachbarkandidat des zweiten Knotens (200a-202h) als Nachbarknotenkandidat des ersten Knotens (200a-202h) auf Basis einer Konnektivität des Nachbarkandidaten des zweiten Knotens (200a-202h) und/oder einer oder mehrerer Verbindungskostenmetriken zwischen dem ersten Knoten (200a-202h) und dem Nachbarkandidaten des zweiten Knotens (200a-202h) eingerichtet wird.

3. Verfahren nach Anspruch 1 oder 2, wobei jeder der mehreren Knoten (200a-202h) des VON über einen oder mehrere Übertragungswege mit einem oder mehreren Kernknoten des VON verbunden ist, zumindest eine der Nachrichten zur Bestimmung des einen oder der mehreren Übertragungswege zu dem einen oder den mehreren Kernknoten verwendet wird, und von den mehreren Knoten (200a-202h) jeder, der nicht mit dem einen oder den mehreren Kernknoten des VON verbunden ist, sich nicht im VON befindet.

4. Verfahren nach Anspruch 1, das ferner umfasst:
Senden einer Nachbarauswahlnachricht an den zweiten Knoten (200a-202h) und
Empfangen einer Bestätigungsnachricht von dem zweiten Knoten (200a-202h), um den zweiten Knoten (200a-202h) als Auswahlnachbarknoten des ersten Knotens (200a-202h) einzurichten, oder Empfangen einer Auswahlumleitungsnachricht von dem zweiten Knoten (200a-202h), um die Nachbarauswahlnachricht zur Begrenzung der Konnektivität des zweiten Knotens innerhalb des VON umzuleiten.

5. Verfahren nach Anspruch 4, wobei der Nachbarknotenkandidat und/oder der Auswahlnachbarknoten auf Basis von einer oder mehreren Verbindungskostenmetriken zwischen den Knoten ausgewählt werden und die eine oder die mehreren Verbindungskostenmetriken eine Verbindungslatenz und/oder eine verfügbare Bandbreite und/oder eine Paketverlustrate umfassen, wobei die Verbindungslatenz auf Basis der Paketumlaufzeit geschätzt wird und wobei die verfügbare Bandbreite unter Verwendung einer Paketpaartechnik und/oder einer Übertragung von Datenblöcken geschätzt wird.

6. Verfahren nach Anspruch 2, wobei die Verbindungskostenmetriken eine Verbindungslatenz und/oder eine verfügbare Bandbreite und/oder eine Paketverlustrate umfassen, wobei die Verbindungslatenz auf Basis der Paketumlaufzeit geschätzt wird und wobei die verfügbare Bandbreite unter Verwendung einer Paketpaartechnik und/oder einer Übertragung von Datenblöcken geschätzt wird.

7. Verfahren nach Anspruch 1, wobei die Verzeichnisabfragen auf einem Domainennamensystem für den Netzwerkverbund basieren, die Knoteninformation des ersten Knotens (200a-202h) in die Verzeichnisabfragen codiert ist und die Auswahlnachbarknoten des ersten Knotens (200a-202h) aus den nahe gelegenen Nachbarknotenkandidaten des ersten Knotens (200a-202h) gewählt werden.

8. Virtuelles Overlay-Netzwerk, das aufweist:
mehrere Knoten (200a-202h), die zum Einrichten einer Topologie über virtuelle Verbindungen miteinander verbunden sind, wobei die Knoten dazu ausgebildet sind, verteilte Algorithmen auszuführen, um die Topologie in Reaktion auf veränderte Bedingungen bei einem darunterliegenden Netzwerkverbund durch Austausch von Übertragungen zwischen Knoten, die zum Einrichten von Knotennachbarn aus den Knoten (200a-202h) verwendet werden, dynamisch zu aktualisieren, wobei zumindest einer der Knoten (200a-202h) einen virtuellen Verbindungsverwaltungsprozess zum Aufbauen und Überwachen der virtuellen Verbindungen innerhalb des Netzwerkverbunds umfasst, die Knotennachbarn einen Nachbarknotenkandidaten und/oder einen Auswahlnachbarknoten und/oder einen statischen Nachbarknoten umfassen, und wobei ein Verzeichnisknoten dazu ausgebildet ist, von einem ersten Knoten der Knoten (200a-202h) eine Suchabfrage zu empfangen und hierdurch veranlasst eine oder mehrere Adressen nahe gelegener Nachbarknotenkandidaten aus den Knoten (200a-202h) in der Topologie zurückzusenden, und wobei die Nachrichten eine von dem ersten Knoten gesendete Nachbarkandidatennachricht zum Einrichten des zweiten Knotens der Knoten (200a-202h), der unter den nahe gelegenen Nachbarknotenkandidaten als Nachbarkandidatenknoten des ersten Knotens (200a-202h) ausgewählt wurde, eine von dem zweiten Knoten (200a-202h) an den ersten Knoten (200a-202h) gesendete Bestätigungsnachricht, falls der zweite Knoten (200a-202h) nicht seine maximal zulässige Anzahl von Verbindungen erreicht hat, und eine von dem zweiten Knoten an den ersten Knoten gesendete Umleitungskandidatennachricht umfasst, um die Nachbarkandidatennachricht an einen dritten Knoten der Knoten (200a-202h) zur Begrenzung einer Konnektivität des zweiten Knotens (200a-202h) innerhalb der Topologie umzuleiten, falls der zweite Knoten die maximale Anzahl zulässiger Verbindungen erreicht hat, und wobei der dritte Knoten (200a-202h) unter den nahe gelegenen Nachbarknotenkandidaten als Nachbarknotenkandidat des ersten Knotens (200a-202h) ausgewählt ist.

9. Virtuelles Overlay-Netzwerk nach Anspruch 8, worin die veränderten Bedingungen einen oder mehrere Verbindungsausfälle und/oder einen oder mehrere Knotenausfälle umfassen.

10. Virtuelles Overlay-Netzwerk nach Anspruch 8, das zum Einrichten statischer Knoten in der Topologie ferner eine Konsole zur manuellen Topologieverwaltung aufweist.

11. Virtuelles Overlay-Netzwerk nach Anspruch 8, worin die verteilten Algorithmen Prozesse aufweisen, die dazu ausgebildet sind, jedem der Knoten (200a-202h) ein Evaluieren der Auswahlmöglichkeiten für Auswahlnachbarknoten aus ihren individuellen Sätzen nahe gelegener Nachbarknotenkandidaten zu ermöglichen, die verteilten Algorithmen Prozesse aufweisen, die dazu ausgebildet sind, jedem der Knoten (200a-202h) zu ermöglichen, dass er dem virtuellen Overlay-Netzwerk gerecht wird und dieses erhält, und worin die verteilten Algorithmen Prozesse aufweisen, die dazu ausgebildet sind, den Knoten ein Aktualisieren ihrer individuellen Sätze von Auswahlnachbarknoten zu ermöglichen.

12. Virtuelles Overlay-Netzwerk nach Anspruch 8, worin die Knoten (200a-202h) ferner dazu ausgebildet sind, beim Einrichten des Nachbarknotenkandidaten und/oder des Auswahlnachbarknotens eine oder mehrere Verbindungsmetriken zu evaluieren, wobei die Verbindungsmetriken eine Latenz und/oder verfügbare Bandbreite und/oder Verlustrate umfassen, und wobei die Latenz unter Verwendung einer Umlaufzeit geschätzt wird, die verfügbare Bandbreite unter Verwendung einer Paketpaartechnik und/oder einer Übertragung von Daten geschätzt wird, jeder Knoten auf eine begrenzte Anzahl von Nachbarknotenkandidaten oder Auswahlnachbarknoten beschränkt ist, die geringer als alle Knoten des virtuellen Overlay-Netzwerks ist, und die Topologie des virtuellen Overlay-Netzwerks die eines darunter liegenden Netzwerkverbunds wiederspiegelt.

13. Virtuelles Overlay-Netzwerk nach Anspruch 8, worin die Nachrichten umfassen:
Konnektivitätstests und/oder
Nachbarkandidatenanfragen und/oder
Nachbarkandidatenbestätigungen und/oder
Auswahlnachbaranfragen und/oder
Auswahlnachbarbestätigungen und/oder
Umleitungsanfragen und/oder
Umleitungsbestätigungen und/oder
Nachbarsuchanfragen und/oder
Nachbarsuchbestätigungen.

14. Virtuelles Overlay-Netzwerk nach Anspruch 13, worin jeder der Knoten (200a-202h) der Topologie über einen oder mehrere Übertragungswege mit einem oder mehreren Kernknoten der Topologie verbunden ist, wobei von den Knoten (200a-202h) jeder, der nicht mit einem oder mehreren Kernknoten der Topologie verbunden ist, sich nicht in dem virtuellen Overlay-Netzwerk befindet und wobei die Konnektivitätstests verwendet werden, um den einen oder die mehreren Übertragungswege zu dem einen oder den mehreren Kernknoten zu bestimmen.

15. Verfahren nach Anspruch 1, das ferner umfasst:
Bestimmen eines aus den mehreren Knoten (220a-202h) ausgewählten statischen Nachbarknotens des ersten Knotens (200a-202h), wobei der statische Nachbarknoten aus den mehreren Knoten (220a-202h) ausgewählt wird und wobei der statische Nachbarknoten unter Verwendung einer manuellen Verwaltungskonsole eingerichtet wird.

## Revendications

1. Procédé comprenant les étapes ci-dessous consistant à :
maintenir dynamiquement un réseau superposé virtuel, VON, (200), sur un inter-réseau (100), par l'intermédiaire de communications entre noeuds qui incluent des messages aptes à établir des voisins de noeuds à partir d'une pluralité de noeuds (200a - 202h), les messages étant transmis sur des tunnels au sein de l'inter-réseau, dans lequel au moins l'un des noeuds (200a - 202h) inclut un processus de gestion de tunnels destiné à construire et surveiller les tunnels au sein de l'inter-réseau, et dans lequel les voisins de noeuds incluent au moins l'un parmi un noeud voisin candidat, un noeud voisin choisi ou un noeud voisin statique ;
recevoir, par le biais d'un noeud de répertoire, des demandes de répertoire en provenance d' un premier noeud des noeuds (200a - 202h) et renvoyer, en réponse à ces demandes, une ou plusieurs adresses de noeuds voisins candidats à proximité du premier noeud (200a - 202h), lesquels sont sélectionnés parmi la pluralité de noeuds (200a - 202h) ;
le premier noeud envoyant un message de voisin candidat à un deuxième noeud de la pluralité de noeuds (200a - 202h) qui est sélectionné parmi les noeuds voisins candidats à proximité (200a - 202h) du premier noeud (200a - 202h) ;
recevoir un message d'accusé de réception en provenance du deuxième noeud (200a - 202h) en vue d'établir le deuxième noeud (200a - 202h) en qualité de noeud voisin candidat du premier noeud (200a - 202h) lorsque le deuxième noeud (200a - 202h) n'a pas atteint son nombre maximum autorisé de connexions ; et
recevoir un message de redirection de candidat en provenance du deuxième noeud (200a - 202h) en vue de rediriger le message de voisin candidat afin de limiter une connectivité du deuxième noeud au sein du réseau VON lorsque le deuxième noeud a atteint son nombre maximum autorisé de connexions.

2. Procédé selon la revendication 1, dans lequel, lorsque le deuxième noeud (200a - 202h) est établi en qualité de noeud voisin candidat du premier noeud (200a - 202h), au moins l'un des messages est utilisé en vue d'interroger le deuxième noeud (200a - 202h) à propos de noeuds voisins candidats à proximité du deuxième noeud (200a - 202h) qui sont sélectionnés parmi les noeuds (200a - 202h), dans lequel un voisin candidat du deuxième noeud (200a - 202h) est établi en qualité de noeud voisin candidat du premier noeud (200a - 202h) sur la base d'au moins l'une des caractéristiques ci-dessous :
une connectivité du voisin candidat du deuxième noeud (200a - 202h), ou une ou plusieurs métriques de coût de liaison entre le premier noeud (200a - 202h) et le voisin candidat du deuxième noeud (200a - 202h).

3. Procédé selon la revendication 1 ou 2, dans lequel chaque noeud de la pluralité de noeuds (200a - 202h) dans le réseau VON est connecté par l'intermédiaire d'un ou plusieurs chemins de communication à un ou plusieurs noeuds centraux au sein du réseau VON, dans lequel au moins l'un des messages est utilisé en vue de déterminer ledit un ou lesdits plusieurs chemins de communication vers ledit un ou lesdits plusieurs noeuds centraux, et dans lequel un noeud quelconque de la pluralité de noeuds (200a - 202h), qui n'est pas connecté à un noeud quelconque dudit un ou desdits plusieurs noeuds centraux dans le réseau VON, n'est pas dans le réseau VON.

4. Procédé selon la revendication 1, comprenant en outre les étapes ci-dessous consistant à :
envoyer un message de voisin choisi au deuxième noeud (200a - 202h) ; et
recevoir un message d'accusé de réception en provenance du deuxième noeud (200a - 202h) en vue d'établir le deuxième noeud (200a - 202h) en qualité de noeud voisin choisi du premier noeud (200a - 202h) ou recevoir un message de redirection de voisin choisi en provenance du deuxième noeud (200a - 202h) en vue de rediriger le message de voisin choisi afin de limiter la connectivité du deuxième noeud au sein du réseau VON.

5. Procédé selon la revendication 4, dans lequel au moins l'un parmi le noeud voisin candidat ou le noeud voisin choisi est sélectionné sur la base d'une ou plusieurs métriques de coût de liaison entre les noeuds, dans lequel ladite une ou lesdites plusieurs métriques de coût de liaison comportent au moins l'une des métriques parmi une latence de liaison, une bande passante disponible ou un taux de perte de paquets, dans lequel la latence de liaison est estimée sur la base d'un temps de propagation aller et retour de paquets, et dans lequel la bande passante disponible est estimée en utilisant au moins l'un des éléments parmi une technique de paires de paquets ou des transferts de blocs de données.

6. Procédé selon la revendication 2, dans lequel les métriques de coût de liaison comportent au moins l'une des métriques parmi une latence de liaison, une bande passante disponible ou un taux de perte de paquets, dans lequel la latence de liaison est estimée sur la base d'un temps de propagation aller et retour de paquets, et dans lequel la bande passante disponible est estimée selon au moins l'un des éléments parmi une technique de paires de paquets ou des transferts de blocs de données.

7. Procédé selon la revendication 1, dans lequel les demandes de répertoire sont basées sur un système de noms de domaines pour l'inter-réseau, dans lequel des informations de noeud du premier noeud (200a - 202h) sont codées dans les demandes de répertoire, et dans lequel les noeuds voisins choisis du premier noeud (200a - 202h) sont sélectionnés à partir des noeuds voisins candidats à proximité du premier noeud (200a - 202h).

8. Réseau superposé virtuel comprenant :
un nombre de noeuds (200a - 202h) interconnectés par l'intermédiaire de liaisons virtuelles de manière à établir une topologie, dans lequel les noeuds sont configurés de manière à exécuter des algorithmes distribués en vue de mettre à jour dynamiquement la topologie en réponse à des conditions changeantes dans un inter-réseau sous-jacent, en échangeant des communications entre noeuds qui incluent des messages utilisés en vue d'établir des voisins de noeuds à partir des noeuds (200a - 202h), dans lequel au moins l'un des noeuds (200a - 202h) inclut un processus de gestion de liaisons virtuelles pour construire et surveiller les liaisons virtuelles au sein de l'inter-réseau, dans lequel les voisins de noeuds incluent au moins l'un parmi un noeud voisin candidat, un noeud voisin choisi ou un noeud voisin statique, dans lequel un noeud de répertoire est configuré de manière à recevoir des demandes de consultation en provenance d'un premier noeud des noeuds (200a - 202h) et à renvoyer, en réponse à ces demandes, une ou plusieurs adresses de noeuds voisins candidats à proximité à partir des noeuds (200a - 202h) dans la topologie, dans lequel les messages incluent un message de voisin candidat envoyé à partir du premier noeud en vue d'établir un deuxième noeud des noeuds (200a - 202h) qui est sélectionné parmi les noeuds voisins candidats à proximité comme étant un noeud voisin candidat du premier noeud (200a - 202h), un message d'accusé de réception envoyé du deuxième noeud (200a - 202h) au premier noeud (200a - 202h) lorsque le deuxième noeud (200a - 202h) n'a pas atteint son nombre maximum autorisé de connexions, et un message de redirection de candidat envoyé du deuxième noeud au premier noeud en vue de rediriger le message de voisin candidat vers un troisième noeud des noeuds (200a - 202h) afin de limiter une connectivité du deuxième noeud (200a - 202h) au sein de la topologie lorsque le deuxième noeud a atteint son nombre maximum autorisé de connexions, dans lequel le troisième noeud (200a - 202h) est sélectionné parmi les noeuds voisins candidats à proximité comme étant un noeud voisin candidat du premier noeud (200a - 202h).

9. Réseau superposé virtuel selon la revendication 8, dans lequel les conditions changeantes comportent au moins un élément parmi :
une ou plusieurs défaillances de liaisons de communication, ou une ou plusieurs défaillances de noeuds.

10. Réseau superposé virtuel selon la revendication 8, comprenant en outre :
une console de gestion de topologie manuelle pour établir des noeuds statiques dans la topologie.

11. Réseau superposé virtuel selon la revendication 8, dans lequel les algorithmes distribués incluent des processus aptes à permettre à chacun des noeuds (200a - 202h) d'évaluer des choix pour des noeuds voisins choisis à partir de leurs ensembles individuels de noeuds voisins candidats à proximité, dans lequel les algorithmes distribués incluent des processus aptes à permettre à chacun des noeuds (200a - 202h) de satisfaire et de maintenir le réseau superposé virtuel, et dans lequel les algorithmes distribués incluent des processus aptes à permettre aux noeuds de mettre à jour leurs ensembles individuels de noeuds voisins choisis.

12. Réseau superposé virtuel selon la revendication 8, dans lequel les noeuds (200a - 202h) sont en outre configurés de manière à évaluer une ou plusieurs métriques de liaisons lors de l'établissement d'au moins l'un parmi le noeud voisin candidat ou le noeud voisin choisi, dans lequel les métriques de liaisons incluent une ou plusieurs métriques parmi une latence, et une bande passante disponible et un taux de perte, dans lequel la latence est estimée en utilisant un temps de propagation aller et retour, dans lequel la bande passante disponible est estimée en utilisant au moins l'un des éléments parmi une technique de paires de paquets ou un transfert de données, dans lequel chaque noeud est limité à un nombre limité de noeuds voisins candidats ou de noeuds voisins choisis qui est inférieur à la totalité des noeuds du réseau superposé virtuel, et dans lequel la topologie du réseau superposé virtuel reflète celle d'un inter-réseau sous-jacent.

13. Réseau superposé virtuel selon la revendication 8, dans lequel les messages comportent un ou plusieurs des éléments parmi :
des tests de connectivité ;
des demandes de voisins candidats,
des accusés de réception de voisins candidats ;
des demandes de voisins choisis ;
des accusés de réception de voisins choisis ;
des demandes de redirection ;
des accusés de réception de redirection ;
des demandes de consultation de voisins ; et
des accusés de réception de consultation de voisins.

14. Réseau superposé virtuel selon la revendication 13, dans lequel chacun des noeuds (200a - 202h) dans la topologie est connecté par l'intermédiaire d'un ou plusieurs chemins de communication à un ou plusieurs noeuds centraux dans la topologie, dans lequel l'un quelconque des noeuds (200a - 202h), qui n'est pas connecté à un ou plusieurs noeuds centraux dans la topologie, n'est pas dans le réseau superposé virtuel, et dans lequel les tests de connectivité sont utilisés en vue de déterminer ledit un ou lesdits plusieurs chemins de communication audit un ou auxdits plusieurs noeuds centraux.

15. Procédé selon la revendication 1, comprenant en outre l'étape ci-dessous consistant à :
établir un noeud voisin statique du premier noeud (200a - 202h), lequel est sélectionné parmi la pluralité de noeuds (220a - 202h), dans lequel le noeud statique est sélectionné parmi la pluralité de noeuds (220a - 202h), et dans lequel le noeud voisin statique est établi en utilisant une console de gestion manuelle.
